# EUROPEAN PATENT APPLICATION

(11) **EP 1 596 288 A1**
(43) Date of publication of application: **16.11.2005**
(21) Application number: 04252765.5
(22) Date of filing: 13.05.2004
(51) Int. Cl.: G06F 9/44, G06F 9/445

(54) **Operating system for launching multiple instances of an application**

(71) Applicant: MATSUSHITA ELECTRIC INDUSTRIAL CO., LTD., Osaka 540-6319 (JP)
(72) Inventor: Button, Gavin, c/o Panasonic Mobile Communications, Wokingham Berkshire RG40 2AQ (GB)
(74) Representative: Haley, Stephen

(57) **Abstract**

An operating system for use in a computer system. The operating system comprises monitoring means for detecting a secondary user input during the start-up of an application on the computer system, and means for initiating the application. The initiating means is arranged to launch the application at least twice dependent on the detection made by the monitoring means.

## Description

The present invention relates to an operating system for use in a computer system and more particularly to an operating system that enables multiple copies of an application to be opened simultaneously.

The term operating system refers to any means executed on a computer system that control the general operation of the computer system. Operating systems are generally used to control a system and enable it to carry out a series of tasks. These tasks include initiation of various applications either automatically or in response to a user input. Applications allow the user to accomplish a variety of jobs such as wordprocessing, e-mail and web browsing. As operating systems have become more sophisticated it has been necessary to add graphical user interfaces to operating system in order to enable the user to instruct various tasks.

In order to initiate an application using any standard operating system the graphical user interface is used and, in particular, it is common for a mouse to be used to control the start of an application. There are various methods known for beginning an application including a single or double click of the mouse button when the mouse cursor is placed over the graphical representation of the application on the screen. It is also possible to set up short cut keys where a specific combination of keys on the keyboard can be programmed to start an application when they are pressed. Altematively, the user can type or select the application to be executed in either a command line or a "start" menu and "run" option within that menu. In addition to this it is possible to configure various operating systems such that a number of applications are automatically started when the system is switched on.

These methods all start one instance of an application. However, there are situations where more than one instance of an application is needed. For example it may be desirable to run two versions of a programme concurrently to compare documents or have numerous instances of a web browser running in order to keep a track on various different threads at once. In order to obtain a second instance of an application it is usually necessary to repeat the steps required to start one instance of the application and, in certain circumstances, the additional step of minimising the first version of the application in order to allow access to the on-screen icon representing the application. This is unnecessarily time consuming and it is therefore the aim of the present invention to provide an operating system that it is arranged to initiate a number of instances of a single application simultaneously.

According to the present invention there is therefore provided an operating system for use in a computer system, the operating system comprising:
monitoring means for detecting a secondary user input during the start-up of an application on the computer system; and
means for initiating the application,
wherein the initiating means is arranged to launch the application at least twice, dependent on the detection made by the monitoring means.

The provision of the monitoring means for detecting a secondary user input is advantageous in that the system is still capable of initiating a single copy of an application in any of the ways that the user would expect to be able to initiate an instance of the application. There is therefore no loss in functionality by changing to the new operating system. In addition to the capabilities of operating systems of the prior art, the operating system of the present invention has a means for detecting secondary user input during the start-up of an application thus enabling two or more instances of an application to be opened simultaneously. This reduces the time taken to open multiple instances of an application and also reduces the risk of inadvertently closing down one version of an application in an attempt to open a second copy.

The present invention will now be described with reference to the drawings in which:
Figure 1 shows a graphical user interface through which the operating system of the present invention may be operated; and
Figure 2 shows a flow chart of how the operating system is actuated.

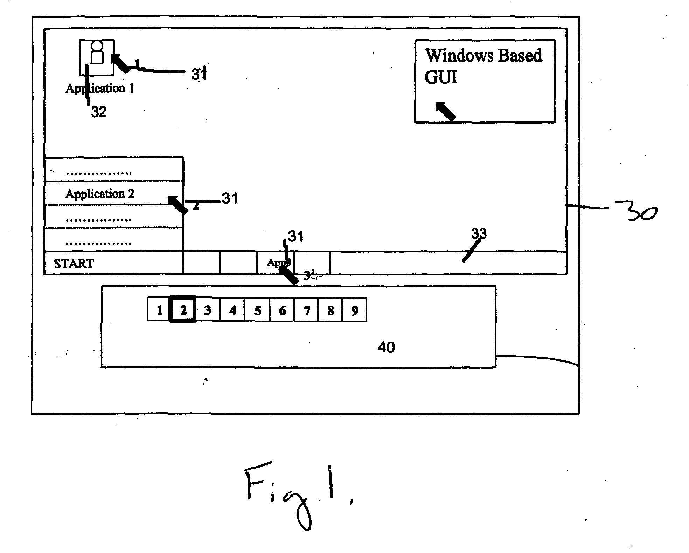

Figure 1 shows a screen 30 and a keyboard 40. The black arrow 31 shows the position of the cursor controlled by a mouse (not shown). The user is able to initiate an application in any one of three different ways using the graphical user interface 30 shown in Figure 1. Firstly, the user holds the cursor 31 over the icon 32 representing the application. Secondly, the start button START on the taskbar 33 at the lower extreme of the screen 30 can be accessed to find the application in the drop-down menu that extends upwardly from the START button on the lower taskbar 33. Thirdly, a short cut icon 34 on the lower taskbar 33, specific to the application may be activated by placing the cursor 31 over the icon on the taskbar 33. Any of these three methods will enable a single instance of application to be opened if no other user input us made.

Whilst the application is being initiated by any one of the three methods described above, using a double click of the mouse or other appropriate initiation, the number 2 key on the keyboard 40 is pressed. This results in two copies of the application being initiated.

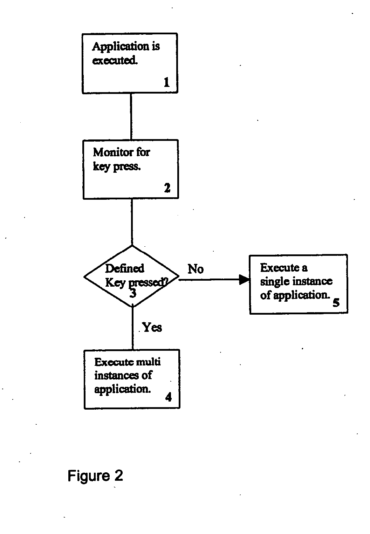

Figure 2 shows the steps that the computer operating system undergoes in order to implement the initiation of multiple instances of the application. Firstly, the application is executed and at this point, the operating system monitors for a key press. The operating system then determines whether a key press has been defined. If no key press has been defined then the operating system continues in accordance with standard procedures for executing a single instance of an application. However, if a key press has been defined then multiple instances of the application are initiated.

## Claims

1. An operating system for use in a computer system, the operating system comprising:
monitoring means for detecting a secondary user input during the start-up of an application on the computer system; and
means for initiating the application,
wherein the initiating means is arranged to launch the application at least twice dependent on the detection made by the monitoring means.

2. A computer system comprising an operating system according to claim 1, and
a graphical user interface and means for inputting primary and secondary user inputs.

3. A computer system according to claim 2, wherein the graphical user interface allows an application to be initiated via an icon on a taskbar.

4. A computer system according to claim 2, wherein the graphical user interface is configured to enable an application to be initiated via an icon on a desktop.

5. A computer system according to claim 2, wherein the graphical user interface is configured to enable an application to be initiated via a START button.

6. A computer system according to any of claims 2 to 5, wherein the primary or secondary input is made using a mouse.

7. A computer system according to any one of claims 2 to 6, wherein the primary or secondary user input is made using a keyboard.

8. A computer system according to any preceding claim, wherein the secondary user input also provides a parameter for use by the application initiating means.
